# EUROPEAN PATENT APPLICATION

(11) **EP 1 354 618 A1**
(43) Date of publication of application: **22.10.2003**
(21) Application number: 01272253.4
(22) Date of filing: 14.12.2001
(51) Int. Cl.: B01D 53/04

(54) **METHOD AND DEVICE FOR SEPARATING OBJECT GAS**

(30) Priority: 26.12.2000 JP 2000395022
(71) Applicant: SUMITOMO SEIKA CHEMICALS CO., LTD., Kako-gun, Hyogo 675-0145 (JP)
(72) Inventor: SUMIDA, Toshihiko, c/o Sumitomo Seika Chem. Co.Ltd, Kako-gun, Hyogo 675-0145 (JP); SASANO, Hiroaki, c/o Sumitomo Seika Chem. Co.Ltd, Kako-gun, Hyogo 675-0145 (JP); MIYAKE, Masanori, c/o Sumitomo Seika Chem. Co.Ltd, Kako-gun, Hyogo 675-0145 (JP)
(74) Representative: Hayes, Adrian Chetwynd
(86) International application number: JP0111009
(87) International publication number: WO02051523

(57) **Abstract**

A method is provided for separating object gas from mixed gas using a plurality of adsorption units each of which is loaded with an adsorbent. In each of the adsorption units, a cycle is repetitively performed which includes a step for introducing mixed gas into an adsorption unit (1) for adsorbing unnecessary gas by the adsorbent for outputting product gas from the adsorption unit, a step for desorbing the unnecessary gas from the adsorbent, and a step for cleaning the adsorption unit. The adsorption unit (1) includes a first sub-unit (1a) with a product gas outlet (1d) and a second sub-unit (1b) with a mixed gas inlet (1e). In the desorption step, the first and the second sub-units (1a, 1b) are brought into mutually non-communicating state, while the mixed gas inlet (1e) of the second sub-unit (1b) is opened. The cleaning step includes a step for introducing first remaining gas of the first sub-unit (1a) into the second sub-unit (1b) for cleaning the second sub-unit (1b) by bringing the two sub-units (1a, 1b) into mutually communicating state.

## Description

### TECHNICAL FIELD

The present invention relates to a method for separating object gas such as hydrogen gas from mixed gas by pressure swing adsorption (PSA process) and also relates to a separation apparatus used therefor.

### BACKGROUND ART

Recently, it is possible to obtain object gas such as hydrogen gas from mixed gas relatively easily and inexpensively by utilizing techniques of a PSA process. Thus, separation of object gas by a PSA process has become increasingly popular. The separation of object gas by a PSA process generally utilizes a PSA separation apparatus provided with 2-4 adsorption towers each loadedwith an adsorbent. In each of the adsorption towers , one cycle including a series of process steps comprising an adsorption step, a desorption step, a cleaning step and a pressurization step is repetitively performed. In the adsorption step, mixed gas is introduced into an adsorption tower for adsorbing unnecessary gas contained in the mixed gas by the adsorbent, thereby obtaining product gas in which object gas is enriched. In the desorption step, the unnecessary gas adsorbed by the adsorbent is desorbed. In the cleaning step, gas remaining in the adsorption tower is discharged from the adsorption tower. In the pressurization step, pressure in the adsorption tower is raised in preparation for the following adsorption step.

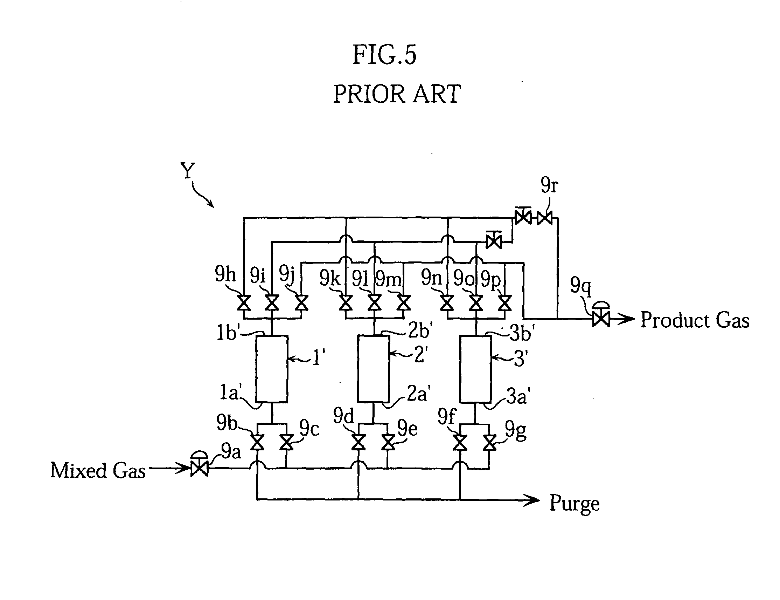

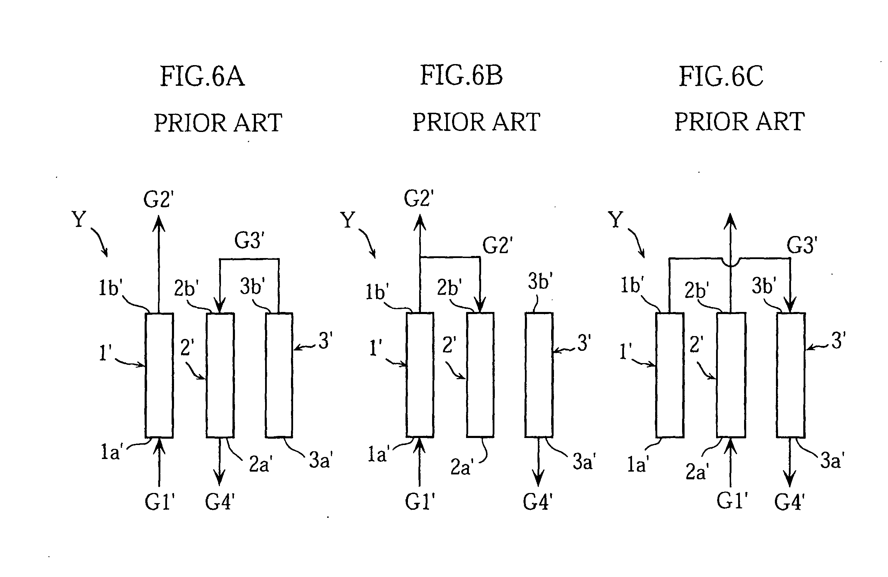

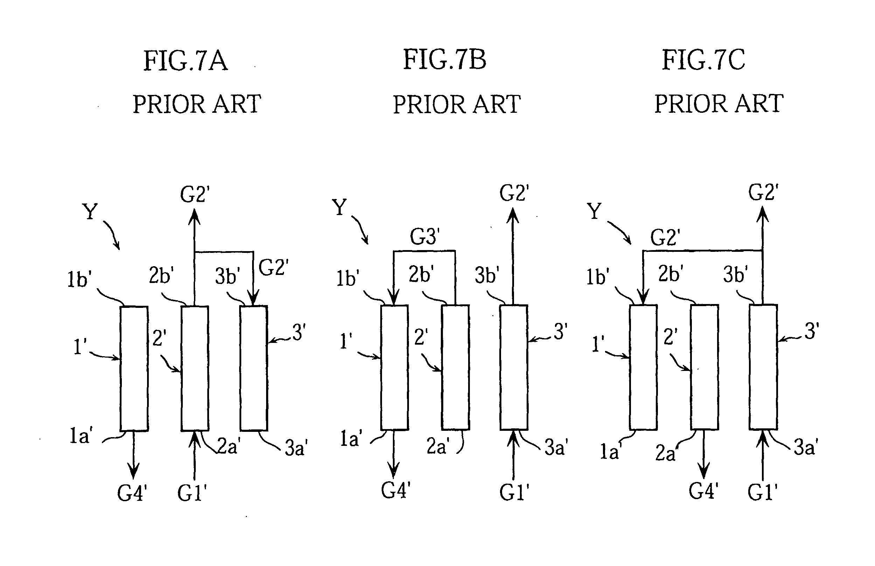

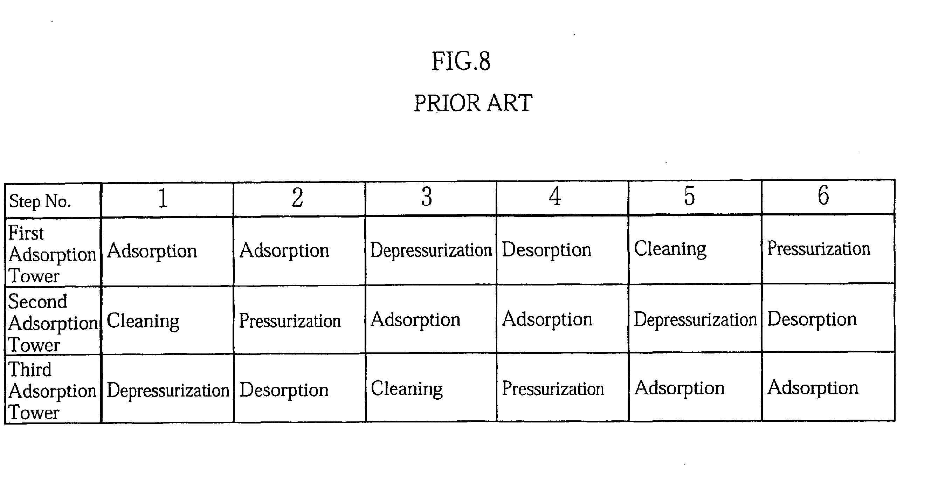

Fig. 5 schematically illustrates a PSA separation apparatus Y for realizing a prior art method for separating hydrogen gas by the PSA process. Figs. 6A-6C and Figs. 7A-7C illustrate gas flow in each step in the prior art PSA process utilizing the PSA separation apparatus Y. Fig. 8 illustrates the states of adsorption towers of the PSA separation apparatus Y in respective process steps.

The PSA separation apparatus Y includes a first through a third adsorption towers 1'-3' each loaded with an adsorbent. The adsorption towers 1'-3' include mixed gas inlets 1a'-3a' and product gas outlets 1b'-3b' , respectively, and are connected to each other through a plurality of pipes. The pipes are provided with valves 9a-9r. During the operation of the apparatus, the valves 9a-9r are selectively opened or closed to realize gas flows shown in Figs. 6A-6C and Figs. 7A-7C.

For separating hydrogen gas from mixed gas using the PSA separation apparatus Y, mixed gas G1' containing hydrogen gas is first introduced into the first adsorption tower 1' through the mixed gas inlet 1a' in Step 1, as shown in Figs. 6A and 8. In the first adsorption tower 1' , unnecessary gas is removed from the mixed gas G1' by the action of the adsorbent, and hydrogen enriched product gas G2' is discharged from the first adsorption tower 1' through the product gas outlet 1b'. Further, in Step 1, remaining gas G3' is discharged, through the product gas outlet 3b', from the third adsorption tower 3' which is at high pressure due to an adsorption step previously performed therein. The gas G3' is introduced, through the product gas outlet 2b' , into the second adsorption tower 2' which has undergone a desorption step. As a result, desorbed gas remaining in the second adsorption tower 2' is discharged, as discharge gas G4', from the second adsorption tower 2' through the mixed gas inlet 2a'. Thus, the second adsorption tower 2' is cleaned.

Subsequently, in Step 2, the first adsorption tower 1' continuously undergoes adsorption of unnecessary gas following Step 1, as shown in Figs. 6B and 8. However, in this step, the product gas G2' discharged from the first adsorption tower 1' is partially supplied to the second adsorption tower 2', thereby pressurizing the second adsorption tower 2'. The pressure in the third adsorption tower 3 ' is reduced by opening the mixed gas inlet 3a' to the atmosphere, thereby desorbing the unnecessary gas from the adsorbent. Part of the desorbed gas is discharged, as discharge gas G4' , from the third adsorption tower 3' through the mixed gas inlet 3a'.

Next, in Step 3, as shown in Figs. 6C and 8, the first adsorption tower 1', the second adsorption tower 2' and the third adsorption towers 3' undergo process steps respectively corresponding to those performed in the third adsorption tower 3', the first adsorption tower 1' and the second adsorption tower 2' in Step 1.

Next, in Step 4, as shown in Figs. 7A and 8, the first adsorption tower 1', the second adsorption tower 2' and the third adsorption towers 3' undergo process steps respectively corresponding to those performed in the third adsorption tower 3', the first adsorption tower 1' and the second adsorption tower 2' in Step 2.

Next, in Step 5, as shown in Figs. 7B and 8, the first adsorption tower 1', the second adsorption tower 2' and the third adsorption tower 3' undergo process steps respectively corresponding to those performed in the second adsorption tower 2', the third adsorption tower 3' and the first adsorption tower 1' in Step 1.

Next, in Step 6, as shown in Figs. 7C and 8, the first adsorption tower 1', the second adsorption tower 2' and the third adsorption tower 3' undergo process steps respectively corresponding to those performed in the second adsorption tower 2', the third adsorption tower 3' and the first adsorption tower 1' in Step 1.

The series of Steps 1-6 are repetitively performed in each of the adsorption towers 1'-3'.

In such a prior art method for separating object gas, each adsorption tower 1'- 3' after desorption is cleaned with gas G3' introduced from a relevant adsorption tower 1' - 3' in which adsorption is finished. In the adsorption towers 1'-3', a larger amount of unnecessary gas is adsorbed at a portion closer to the mixed gas inlet 1a'-3a', and the gas existing at such a portion closer to the inlet contains a higher concentration of unnecessary gas. That is, in each of the adsorption towers 1'-3', the closer a portion is to the product gas outlet 1b' - 3b' , the lower the adsorption amount and concentration of unnecessary gas is.

Therefore, in Step 1 for example, the concentration of unnecessary gas in the remaining gas G3' discharged from the third adsorption tower 3' increases with time because it is discharged through the product gas outlet 3b'. Since such gas G3' is introduced into the second adsorption tower 2' through the product gas outlet 2b', the concentration of unnecessary gas increases with time at a portion adjacent the product gas outlet 2b' of the second adsorption tower 2'. In Step 2, the second adsorption tower 2' undergoes pressurization by introducing product gas G2' outputted from the first adsorption tower 1' through the product gas outlet 2b', and then in Step 3, the second adsorption tower 2' undergoes an adsorption step by introducing mixed gas G1' through the mixed gas inlet 2a'.

Therefore, in Step 2, the gas located adjacent to the product gas outlet 2b' of the second adsorption tower 2', which contains a high concentration of unnecessary gas, is pushed deep into the second adsorption tower 2' and adsorbed by the adsorbent. This causes a decrease in the adsorption capacity of the second adsorption tower 2' in Step 3, i.e. a decrease in the amount of unnecessary gas which can be adsorbed in the adsorption step.

It is, therefore, an object of the present invention to provide an object gas separation method which is capable of efficiently separating object gas from mixed gas for obtaining high purity product gas with high yield, and to provide a separation apparatus used therefor.

### DISCLOSURE OF THE INVENTION

According to a first aspect of the present invention, there is provided a method for separating object gas from mixed gas using a plurality of adsorption units each of which is loaded with an adsorbent. In this method, a cycle is repetitively performed in each of the adsorption units, which includes an adsorption step for introducing mixed gas into a selected one of the adsorption units for adsorbing unnecessary gas contained in the mixed gas by the adsorbent for outputting product gas in which the object gas is enriched from the adsorption unit, a desorption step for desorbing the unnecessary gas from the adsorbent, a cleaning step for discharging remaining gas remaining in the adsorption unit from the adsorption unit using cleaning gas, and a pressurizing step for raising pressure in the adsorption unit. Each of the adsorption units includes a first sub-unit which includes a product gas outlet for outputting the product gas and which is loaded with a first adsorbent, a second sub-unit which includes a mixed gas inlet for introducing the mixed gas and which is connected to the first sub-unit and is loaded with a second adsorbent, and switching means for switching the first sub-unit and the second sub-unit between a mutually communicating state and a mutually non-communicating state. The desorption step is performed by bringing the first sub-unit and the second sub-unit into the non-communicating state while opening the mixed gas inlet of the second sub-unit. The cleaning step includes a second sub-unit cleaning step for introducing first remaining gas remaining in the first sub-unit into the second sub-unit as cleaning gas by bringing the first sub-unit and the second sub-unit into the communicating state while discharging second remaining gas remaining in the second sub-unit through the mixed gas inlet.

Preferably, the cleaning step further includes a continuous sub-unit cleaning step in which the first sub-unit and the second sub-unit of a first adsorption unit undergoing the cleaning step are brought into the communicating state and the product gas outputted from the first sub-unit of a second adsorption unit undergoing the adsorption step is introduced into the first sub-unit of the first adsorption unit as the cleaning gas while third remaining gas remaining in the first sub-unit and the second sub-unit of the first adsorption unit is discharged through the mixed gas inlet of the second sub-unit of the first adsorption unit.

Preferably, the minimum pressure in the first sub-unit of the first adsorption unit during the continuous sub-unit cleaning step is no less than atmospheric pressure and no more than 50kPa (gauge pressure).

Preferably, the maximum pressure in the adsorption unit during the adsorption step is no less than 100kPa (gauge pressure).

Preferably, the volume of the first adsorbent loaded in the first sub-unit is 20-80% of the total volume of the first adsorbent and the second adsorbent loaded in the adsorption unit.

Preferably, the mixed gas contains hydrogen gas as the object gas.

Preferably, the mixed gas contains carbonic acid gas as the unnecessary gas.

According to a second aspect of the present invention, there is provided an apparatus for separating object gas from mixed gas provided with a plurality of adsorption units each loaded with an adsorbent. The apparatus repetitively performs a cycle in each of the adsorption units, which includes an adsorption step for introducing the mixed gas into a selected one of the adsorption units for adsorbing unnecessary gas contained in the mixed gas by the adsorbent for outputting product gas in which the object gas is enriched from the adsorption unit, a desorption step for desorbing the unnecessary gas from the adsorbent, a cleaning step for discharging remaining gas remaining in the adsorption unit from the adsorption unit using cleaning gas, and a pressurizing step for raising pressure in the adsorption unit. Each of the adsorption units includes a first sub-unit which includes a product gas outlet for outputting the product gas and which is loaded with a first adsorbent, a second sub-unit which includes a mixed gas inlet for introducing the mixed gas and which is connected to the first sub-unit and is loaded with a second adsorbent, and switching means for switching the first sub-unit and the second sub-unit between a mutually communicating state and a mutually non-communicating state. The first adsorbent and the second adsorbent are a same kind of adsorbents capable of adsorbing a same kind of unnecessary gas.

### BRIEF DESCRIPTION OF THE DRAWINGS

Fig. 1 schematically illustrates a PSA separation apparatus for realizing an object gas separation method according to the present invention.
Fig. 2 illustrates the state of each sub-unit and the open/close state of each valve in each step, which are included in a first and a second adsorption units of the PSA separation apparatus shown in Fig. 1.
Figs. 3A-3D respectively illustrate gas flows in Steps 1-4 in the object gas separation method according to the present invention.
Figs. 4A-4D respectively illustrate gas flows in Steps 5-8 subsequent to Step 4 shown in Fig. 3D.
Figs. 5 schematically illustrates a PSA separation apparatus for realizing a prior art method for separating hydrogen gas by a PSA process.
Figs. 6A-6C respectively illustrate gas flows in Steps 1-3 in the prior art PSA process utilizing the PSA separation apparatus shown in Fig. 5.
Figs. 7A-7C respectively illustrate gas flows in Steps 4-6 subsequent to Step 3 shown in Fig. 6C.
Fig. 8 illustrates the state of each adsorption tower of the prior art PSA separation apparatus shown in Fig. 5 in each step.

### BEST MODE FOR CARRYING OUT THE INVENTION

Preferred embodiments of the present invention will be described below in detail with reference to the accompanying drawings.

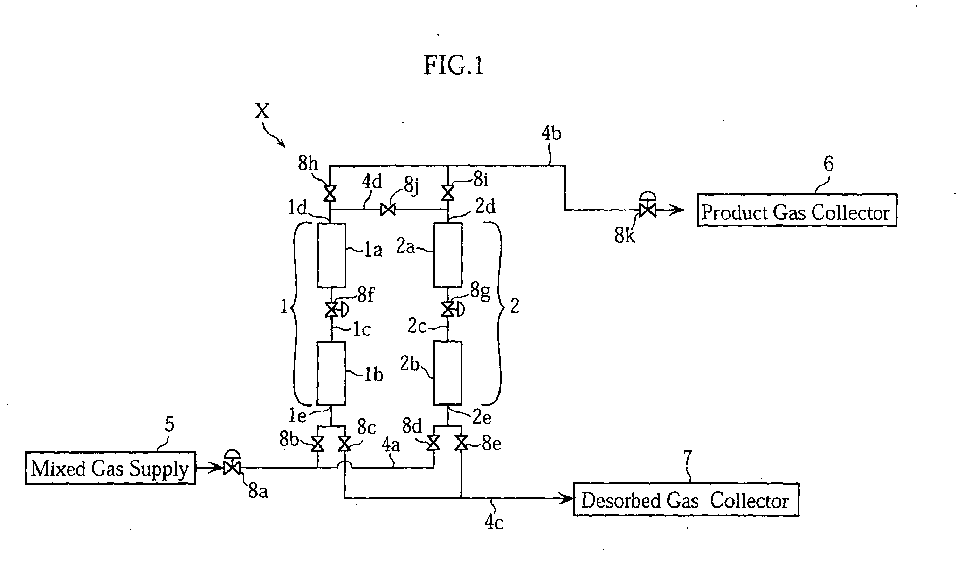

Fig. 1 schematically illustrates a PSA separation apparatus X for realizing an object gas separation method according to the present invention. As shown in Fig. 1, the PSA separation apparatus X includes a first adsorption unit 1 and a second adsorption unit 2. The first adsorption unit 1 includes a first sub-unit 1a, a second sub-unit 1b, and a pipe 1c connecting these units to each other. The first sub-unit 1a and the second sub-unit 1b are respectively provided with a product gas outlet 1d and a mixed gas inlet 1e of the first adsorption unit 1. The pipe 1c is provided with a valve 8f as selection means for selecting a state in which the first sub-unit 1a and the second sub-unit 1b communicate with each other or a state in which these units do not communicate with each other. Similarly, the second adsorption unit 2 includes a first sub-unit 2a, a second sub-unit 2b, and a pipe 2c connecting these units to each other. The first sub-unit 2a and the second sub-unit 2b are respectively provided with a product gas outlet 2d and a mixed gas inlet 2e of the second adsorption unit 2. The pipe 2c is provided with a valve 8g as selection means for selecting a state in which the first sub-unit 2a and the second sub-unit 2b communicate with each other or a state in which these units do not communicate with each other

The sub-units 1a, 1b, 2a and 2b are loaded with a same kind of adsorbent. The volume of the adsorbent loaded in each of the first sub-units 1a and 2a may be 20-80% of the total volume of the adsorbent loaded in the relevant adsorption unit 1 or 2, for example.

The kind of an adsorbent to be used is determined based on the composition of the mixed gas, or more specifically, based on the kind of the unnecessary gas to be removed. For example, zeolite molecular sieve (Ca5A type) may be used for adsorbing carbon monoxide gas or nitrogen gas, carbon molecular sieve may be used for adsorbing carbonic acid gas or methane gas, and alumina may be used for adsorbing water. One of these kinds of adsorbents may be used solely or plural kinds of these adsorbents may be used together.

In the specification of the present invention, "adsorbents of a same kind" do not necessarily mean adsorbents having the same composition, but mean adsorbents capable of adsorbing or non-adsorbing a same kind of gas components. For example, in this specification, Ca-exchanged zeolite and Na-exchanged zeolite as adsorbents for carbon monoxide or nitrogen are adsorbents of the same kind. On the other hand, a zeolite-based adsorbent for adsorbing nitrogen and a carbon-based adsorbent for adsorbing carbonic acid gas are not adsorbents of the same kind in this specification. Further, there may be a case where two sub-units of one adsorption unit contain a common adsorbent, such as the case where one sub-unit is loaded with a zeolite-based adsorbent whereas the other sub-unit is loaded with two kinds of adsorbents, i.e. a carbon-based adsorbent and a zeolite-based adsorbent. In this specification, the two sub-units is also said to contain adsorbents of a same kind even in such a case.

The adsorption units 1 and 2 are connected to a mixed gas supply 5 through a pipe 4a for mixed gas supply, are connected to a product gas collector 6 through a pipe 4b for product gas collection, and are connected to a desorbed gas collector 7 through a pipe 4c for desorbed gas collection. The first adsorption unit 1 and the second adsorption unit 2 are connected to each other via a pressurization pipe 4d connecting respective product gas outlets 1d and 2d of the first sub-units 1a and 2a to each other. The pipes 4a-4d are provided with valves 8a-8e and 8h-8k.

During the operation of the PSA separation apparatus X, the open/close state of the valves 8a-8e and 8h-8k provided at the pipes 4a-4d and of the valves 8f and 8g provided at the pipes 1c, 2c are appropriately switched, individually. Thus, the gas flow in the PSA separation apparatus X and pressure in each of the adsorption units 1 and 2 are controlled. In each of the adsorption units 1 and 2, a series of process steps including an adsorption step, a desorption step, a cleaning step and a pressurization step are performed in accordance with the switching of the valves 8a-8k. The adsorption step is performed under high pressure for adsorbing unnecessary gas by the adsorbent. The desorption step is performed under low pressure for desorbing the unnecessary gas from the adsorbent. In the cleaning step, desorbed gas or the like remaining in the unit is discharged by purging, for example. In the pressurization step, pressure in the unit is raised in preparation for an adsorption step. The maximum pressure in the adsorption units 1, 2 during the adsorption step may be no less than 100kPa (gauge pressure) and more preferably 400-1000kPa (gauge pressure), for example. The minimum pressure in the adsorption units 1, 2 during the desorption step may be approximately atmospheric pressure, for example. The minimum pressure in the adsorption units 1, 2 during the cleaning step may be no less than atmospheric pressure and no more than 50kPa (gauge pressure), for example.

In this embodiment, by using the PSA separation apparatus X having the above-described structure, unnecessary gas is removed from mixed gas, thereby separating object gas from the mixed gas. The object gas may typically be hydrogen gas, but may be another kind of gas such as nitrogen gas or oxygen gas.

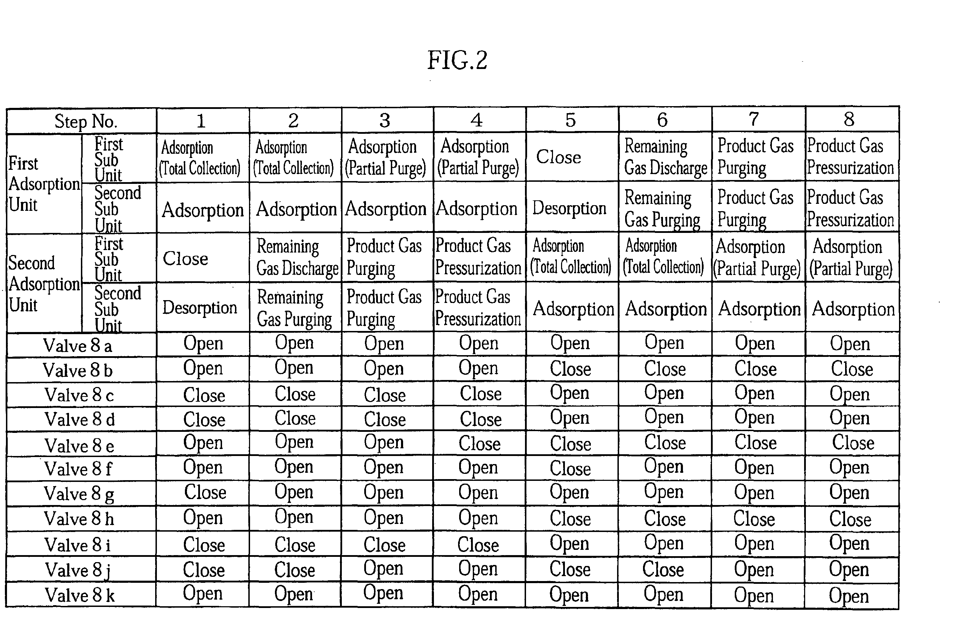

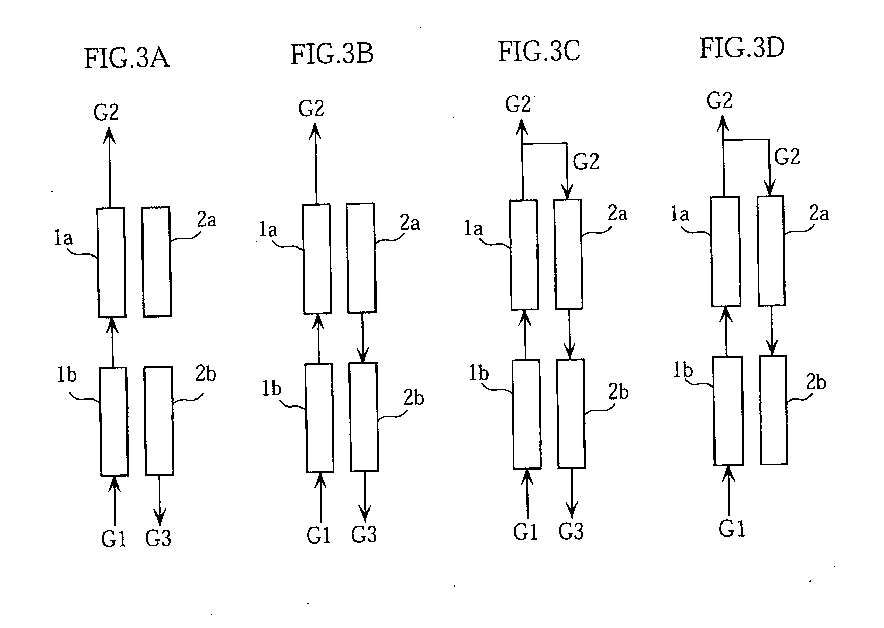

The process steps are performed in each of the adsorption units 1 and 2, or in each of the sub-units 1a, 1b, 2a and 2b at the timings (Steps) as shown in Fig. 2. One cycle consisting of Steps 1-8 shown in Fig. 2 is repetitively performed. Fig. 2 also shows the open/close state of the valves 8a-8k in each step. Figs. 3A-3D and Figs . 4A-4D illustrate gas flows in Steps 1-8.

In Step 1, the open/close state of each valve 8a-8k is selected as shown in Fig. 2 to realize the gas flow as shown in Fig. 3A. An adsorption step is performed in the first adsorption unit 1, whereas a desorption step is performed in the second adsorption unit 2.

Specifically, in the first adsorption unit 1, the first sub-unit 1a is held in communication with the second sub-unit 1b, as shown in Figs. 1 and 3A. The first sub-unit 1a communicates with the product gas collector 6. The second sub-unit 1b communicates with the mixed gas supply 5, so that mixed gas G1 from the mixed gas supply 5 is supplied to the second sub-unit 1b through the mixed gas supply pipe 4a. The mixed gas G1, after having undergone partial removal of unnecessary gas in the second sub-unit 1b, is introduced into the first sub-unit 1a through the pipe 1c. In the first sub-unit 1a, unnecessary gas contained in the mixed gas G1 is further removed to discharge product gas G2. The product gas G2 is collected to the product gas collector 6 through the pipe 4b.

In the second adsorption unit 2, communication is not provided between the first sub-unit 2a and the second sub-unit 2b. The first sub-unit 2a is kept closed so that no gas introduction nor gas discharge occurs. The interior of the first sub-unit 2a is held at high pressure due to the adsorption step previously performed in the first sub-unit 2a. The second sub-unit 2b communicates with the desorbed gas collector 7. The interior of the second sub-unit 2b is held at high pressure due to the adsorption step previously performed therein, so that its communication with the desorbed gas collector 7 causes the interior of the second sub-unit 2b to undergo a pressure drop. The pressure drop causes the unnecessary gas which has adsorbed by the adsorbent to desorb from the adsorbent. Part of the desorbed gas is collected, as discharged gas G3, to the desorbed gas collector 7 through the pipe 4c.

Since the second sub-unit 2b is located in the second adsorption unit 2 on the side through which mixed gas G1 is introduced in another step, most part of unnecessary gas is adsorbed by the adsorbent in the second sub-unit 2b of the second adsorption unit 2. Accordingly, by the desorption of the unnecessary gas in the second sub-unit 2b, most part of the unnecessary gas in the second adsorption unit 2 is desorbed. Therefore, the desorption in the first sub-unit 2a need not positively be performed in this step. The desorption of unnecessary gas in the first sub-unit 2a is in fact performed in the following cleaning (purging) step.

In Step 2, the open/close state of each valve 8a-8k is selected as shown in Fig. 2 to realize the gas flow as shown in Fig. 3B. An adsorption step is performed in the first adsorption unit 1, whereas a cleaning (purging) step is performed in the second adsorption unit 2.

Specifically, as shown in Figs. 1 and 3B, the adsorption step in the first adsorption unit 1 is performed similarly to that performed in Step 1. In the second adsorption unit 2, the first sub-unit 2a is held in communication with the second sub-unit 2b. The second sub-unit 2b communicates with the desorbed gas collector 7. Since the first sub-unit 2a is held at high pressure for the adsorption step previously performed therein whereas the second sub-unit 2b is held at low pressure after the desorption step, the gas remaining in the first sub-unit 2a is introduced into the second sub-unit 2b. Accordingly, the pressure in the first sub-unit 2a decreases, causing the unnecessary gas to desorb from the adsorbent of the first sub-unit 2a. The unnecessary gas is also introduced into the second sub-unit 2b. Thus, remaining gas in the second sub-unit 2b is discharged. The discharged gas G3 is collected to the desorbed gas collector 7 through the pipe 4c.

The gas which has remained in the first sub-unit 2a is the gas from which most part of unnecessary gas was removed in the second sub-unit 2b by the adsorption step previously performed therein. In this step, therefore, even when the unnecessary gas desorbed from the adsorbent of the first sub-unit 2a mixes in the remaining gas, the remaining gas has a composition in which the unnecessary gas concentration is low, similarly to the product gas. Therefore, even when the remaining gas in the first sub-unit 2a passes through the second sub-unit 2b in which the desorption step has finished, a large amount of unnecessary gas does not adsorb to the adsorbent of the second sub-unit 2b from which the unnecessary gas has once desorbed. Thus, the desorbed gas remaining in the second sub-unit 2b is discharged to the outside. In this way, the cleaning of the second sub-unit 2b is properly performed.

Further, the remaining gas is introduced into the second sub-unit 2b successively from aportion of the gas located farther from the product gas outlet 2d of the first sub-unit 2a to a portion of the gas located closer to the outlet. Therefore, the unnecessary gas concentration of the remaining gas introduced into the second sub-unit 2b decreases with time. Accordingly, the unnecessary gas concentration (partial pressure) in the second sub-unit 2b decreases with time, thereby promoting desorption of the unnecessary gas from the adsorbent of the second sub-unit 2b. As a result, the regeneration efficiency of the adsorbent in the second sub-unit 2b is advantageously enhanced.

In Step 3, the open/close state of each valve 8a-8k is selected as shown in Fig. 2 to realize the gas flow as shown in Fig. 3C. An adsorption step is performed in the first adsorption unit 1, whereas a cleaning (purging) step is performed in the second adsorption unit 2.

Specifically, in the first adsorption unit 1, the first sub-unit 1a is held in communication with the second sub-unit 1b, as shown in Figs. 1 and 3C. The first sub-unit 1a communicates with the product gas collector 6, whereas the second sub-unit 16 communicates with the mixed gas supply 5. Similarly to Step 1 and Step 2, product gas G2 after unnecessary gas is removed in the second sub-unit 1b and in the first sub-unit 1a is outputted from the first sub-unit 1a. In Step 3, however, the first sub-unit 1a communicates also with the first sub-unit 2a of the second adsorption unit 2 for allowing introduction of the product gas G2 into the first sub-unit 2a.

In the second adsorption unit 2, the first sub-unit 2a is held in communication with the second sub-unit 2b. The first sub-unit 2a communicates with the first sub-unit 1a of the first adsorption unit 1, whereas the second sub-unit 2b communicates with the desorbed gas collector 7. The pressure in the first sub-unit 1a of the first adsorption unit 1 is high due to the adsorption step being performed therein, whereas the pressure in the first sub-unit 2a of the second adsorption unit 2 is low due to its previous discharge of remaining gas . Therefore, the product gas G2 is introduced from the first sub-unit 1a of the first adsorption unit 1 into the first sub-unit 2a of the second adsorption unit 2. The product gas G2 is further introduced into the second sub-unit 2b through the pipe 2c.

Since the actual desorption step has previously been performed in the first sub-unit 2a of the second adsorption unit 2, desorbed gas may remain in this sub-unit. Even in such a case, however, the introduction of the product gas G2 in this step causes the desorbed gas to be discharged from the first sub-unit 2a for introduction into the second sub-unit 2b. The gas introduced into the second sub-unit 2b is discharged from the second sub-unit 2b and collected to the desorbed gas collector 7 through the pipe 4c as discharged gas G3. At that time, even if desorbed gas remains in the second sub-unit 2b even after the cleaning step of Step 2, such desorbed gas is also discharged from the second sub-unit 2b.

In this way, cleaning is performed for the interior of the first and the second sub-units 2a and 2b of the second adsorption unit 2. Since the product gas G2 in which the unnecessary gas concentration is low is utilized as cleaning gas, it is unnecessary to worry about the readsorption of the unnecessary gas in each of the sub-units 2a and 2b in the cleaning (purging) step.

Further, before the cleaning step of Step 3, the second sub-unit 2b has been cleaned in Step 2 by utilizing remaining gas from the first sub-unit 2a. Therefore, only a small amount of cleaning gas (product gas G2) is required for the cleaning of Step 3. Accordingly, the cleaning of the sub-units 2a and 2b can be performed while reducing or eliminating the amount of product gas discharged from the sub-units 2a and 2b during the cleaning. Moreover, the cleaning efficiency as a whole is enhanced by effectively utilizing the remaining gas or pressure of the first sub-unit 2a in Step 2. As a result, the regeneration of the adsorbent is reliably performed.

In Step 4, the open/close state of each valve 8a-8k is selected as shown in Fig. 2 to realize the gas flow as shown in Fig. 3D. An adsorption step is performed in the first adsorption unit 1, whereas a pressurization step is performed in the second adsorption unit 2.

Specifically, as shown in Figs. 1 and 3D, adsorption of unnecessary gas in each of the sub-units 1a and 1b and supply of the product gas G2 to the first sub-unit 2a of the second adsorption unit 2 are performed in the first adsorption unit 1 similarly to Step 3.

In the second adsorption unit 2, the first sub-unit 2a is held in communication with the second sub-unit 2b. The first sub-unit 2a communicates with the first sub-unit 1a of the first adsorption unit 1. The second sub-unit 2b does not communicate with the mixed gas supply 5 nor with the desorbed gas collector 7. Each sub-unit 2a, 2b is held at low pressure due to a desorption step or a cleaning (purging) step previously performed therein, and the second sub-unit 2b communicates only with the first sub-unit 2a. Therefore, by the introduction of the product gas G2 from the first adsorption unit 1, the internal pressure of the first and the second sub-units 2a and 2b increases.

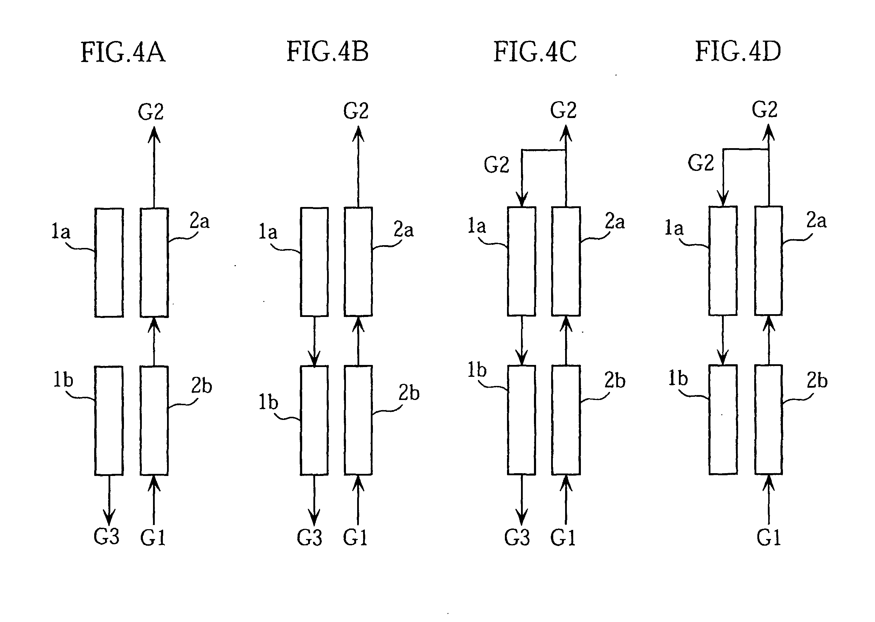

In Steps 5 through 8, the open/close state of each valve 8a-8k is selected as shown in Fig. 2 to realize the gas flows as shown in Figs. 4A-4D. The steps similar to those performed in the second adsorption unit 2 in Steps 1-4 are performed in the first adsorption unit 1, whereas the steps similar to those performed in the first adsorption unit 1 in Steps 1-4 are performed in the second adsorption unit 2.

Specifically referring to the first adsorption unit 1, in Step 5, desorption of unnecessary gas is performed in the second sub-unit 1b as shown in Fig. 4A. In Step 6, cleaning (purging) of the second sub-unit 1b is performed utilizing the remaining gas of the first sub-unit 1a, as shown in Fig. 4B. In Step 7, cleaning (purging) of the first and the second sub-units 1a and 1b are performed utilizing the product gas G2, as shown in Fig. 4C. In Step 8, the first and the second sub-units 1a and 1b are pressurized utilizing the product gas G2, as shown in Fig. 4D.

In Steps 5-8, an adsorption step is performed in the second adsorption unit 2 in which a pressurization step has been finished in Step 4, as shown in Figs. 4A-4D. In Steps 7 and 8, part of the product gas G2 is introduced into the first sub-unit 1a of the first adsorption unit 1.

By repetitively performing the series of Steps 1-8 described above, separation of object gas from mixed gas is continuously performed in the first adsorption unit 1 and the second adsorption unit 2, thereby obtaining product gas in which object gas is enriched.

In the present invention, when attention is directed to the first adsorption unit 1, mixed gas G1 is introduced through the mixed gas inlet 1e of the second sub-unit 1b and product gas G2 is outputted through the product gas outlet 1d of the first sub-unit 1a in the adsorption step (Steps 1―4). Therefore, in the first adsorption unit 1 after the adsorption step is finished, the concentration of unnecessary gas is lower at a portion closer to the product gas outlet 1d (the first sub-unit 1a). On the other hand, a larger amount of unnecessary gas is adsorbed by the adsorbent located closer to the mixed gas inlet 1e (the second sub-unit 1b). By opening only the second sub-unit 1b in the desorption step (Step 5), the pressure in the second sub-unit 1b decreases to cause the unnecessary gas to desorb from the adsorbent, and this gas is discharged to the outside of the second sub-unit 1b. Therefore, when the first adsorption unit 1 as a whole is viewed, only the portion where a large amount of unnecessary gas is adsorbed is subjected to depressurization in the desorption step (Step 5). Therefore, the desorption is more efficient as compared with the case where the desorption is performed in the entirety of the first adsorption unit 1 at one time.

In the cleaning step (Step 6), the first sub-unit 1a in which the concentration of object gas is high is held in communication with the second sub-unit 1b in which part of the gas desorbed from the adsorbent remains. The second sub-unit 1b is held at low pressure as a result of its previous undergoing of the desorption step (Step 5), whereas the first sub-unit 1a is held at high pressure as a result of its previous undergoing of the adsorption step (Steps 1―4). Therefore, when the first sub-unit 1a is allowed to communicate with the second sub-unit 1b, gas remaining in the first sub-unit 1a is introduced into the second sub-unit 1b due to the pressure difference, thereby discharging desorbed gas remaining in the second sub-unit 1b to the outside of the second sub-unit 1b. When the desorbed gas is discharged from the second sub-unit 1b and gas containing a high concentration of object gas is introduced into the second sub-unit 1b, the concentration (partial pressure) of unnecessary gas in the second sub-unit 1b decreases. Particularly, a portion of the remaining gas located farther from the product gas outlet 1d reaches the second sub-unit 1b earlier than a portion of the remaining gas located closer to the outlet. Therefore, the unnecessary gas concentration in the cleaning gas introduced into the second sub-unit 1b decreases with time, so that the partial pressure of the unnecessary gas in the second sub-unit 1b is kept low. As a result, desorption of the unnecessary gas from the adsorbent in the second sub-unit 1b is promoted, which advantageously enhances the regeneration efficiency of the adsorbent in the second sub-unit 1b.

Further, by cleaning the second sub-unit 1b with the cleaning gas from the first sub-unit 1a, the concentration profile of the unnecessary gas in the second sub-unit 1b is replaced with that in the first sub-unit 1a before the cleaning, i.e. is replaced with the concentration profile at a portion adjacent the product gas outlet Id. As a result, the unnecessary gas concentration in the second sub-unit 1b as a whole is low after the cleaning step. Therefore, even when the cleaning is completed after the supply of cleaning gas from the first sub-unit 1a followed by pressurization and adsorption, the amount of unnecessary gas mixing in the product gas is small. In this case, the yield of object gas is advantageously enhanced, because the amount of object gas existing in the first sub-unit 1a before the cleaning (after the adsorption step) and thereafter discharged from the first adsorption unit 1 is small.

Similarly to the first adsorption unit 1, the second adsorption unit 2 also enjoys the advantages described above.

Further, in the present invention, in the first adsorption unit after the adsorption step is finished, desorption of the second sub-unit 1b (desorption step) and gas supply (cleaning step) from the first sub-unit 1a to the second sub-unit 1b are performed. Therefore, at least from the viewpoint of the cleaning of the second sub-unit 1b, it is not essential to clean the first adsorption unit 1 by supplying gas from the second adsorption unit 2 after the adsorption step to the first adsorption unit 1 after the desorption step. Therefore, to constitute an apparatus for continuously obtaining product gas by the PSA process, the minimum number of adsorption units required is two, whichmakes it possible to simplify the structure of the apparatus. In the prior art method, to continuously separate object gas while performing cleaning in one adsorption unit, the apparatus needs to include three adsorption units like the apparatus Y shown in Fig. 5, i.e. one to perform depressurization, one to perform cleaning and one to perform an adsorption step to output product gas for ensuring continuity of gas separation. However, as is in the present invention, when cleaning is performed by gas transfer within a single adsorption unit and without necessitating gas transfer between adsorption units, the continuity of gas separation can be ensured only by two adsorption units, i.e. an adsorption unit to perform the adsorption step and an adsorption unit to perform regeneration of the adsorbent. In this way, with the separation method according to the present invention, it is possible to reduce the number of adsorption units and eliminate the pipe for cleaning, thereby reducing the total number of valves. As a result, the structure of the apparatus can be simplified, which facilitates the controlling of the apparatus.

The present invention is applicable for obtaining various kinds of object gas such as hydrogen gas, nitrogen gas or oxygen gas from mixed gas. Particularly, the present invention can be utilized in the case where mixed gas containing hydrogen gas as object gas is used or in the case where object gas is to be separated from mixed gas containing carbonic acid gas as an impurity. For example, the invention is suitably utilized for separating hydrogen gas from mixed gas composed of 60-90vo1.% hydrogen gas, 10-40vol.% carbonic acidgas (carbon dioxide gas), 0-5vol.% carbon monoxide gas, 0-5vol.% methane gas and 0-5vol.% water vapor.

Carbonic acid gas is readily adsorbed by various adsorbents, and once adsorbed, unlikely to be desorbed. Therefore, if carbonic acid gas is not properly removed in the cleaning step, unnecessary gas (e.g. methane) other than carbonic acid gas is not sufficiently adsorbed by the adsorbent, which decreases the yield of hydrogen gas. Therefore, the present invention is suitably utilized for separating hydrogen gas from mixed gas containing carbonic acid gas as unnecessary gas. Further, hydrogen gas is obtained by thermally decomposing (steam reforming) methanol or natural gas, for example. Therefore, when hydrogen gas is to be separated as object gas, the mixed gas often contains carbonic acid gas as unnecessary gas. Also from this viewpoint, the present invention is suitable for separating hydrogen gas from mixed gas containing carbonic acid gas.

In this embodiment, two adsorption units each consisting of two sub-units are utilized. However, the present invention is also applicable to the case where no less than three adsorption units are utilized and to the case where each adsorption unit includes no less than three sub-units. Further, when exhaust gas G3 is less toxic, the exhaust gas G3 may be released to the atmosphere without providing the desorbed gas collector 7 in the PSA separation apparatus X.

### [Examples]

Now, an example of the present invention as well as a comparative example will be described.

### [Example 1]

In this Example, use was made of a PSA separation apparatus X as shown in Fig. 1, which comprised two adsorption units 1 and 2. Each adsorption unit 1 (2) included two sub-units 1a, 1b (2a, 2b). A cycle consisting of Steps 1-8 shown in Fig. 2 was repetitively performed using the PSA separation apparatus X under the conditions described below to separate hydrogen gas from mixed gas.

For each adsorption unit 1 (2), 0.9 liter of zeolite molecular sieve (Ca5A type) (Tradename:5A8X12HP, available from UNION SHOWA K. K . ) as an adsorbent was loaded in the first sub-unit 1a (2a), whereas 0.44 liter of zeolite molecular sieve (Ca5A type) and 1.66 liters of carbon molecular sieve (Tradename: H₂-D55/2, available from Carbo Tech Aktivkohlen GmbH) as adsorbents were loaded in the second sub-unit 1b (2b). The mixed gas used composed of 77.77vol.% hydrogen gas, 19.62vol.% carbonic acid gas (carbon dioxide gas), 1vol. % carbon monoxide gas, 0.0008vol.% nitrogen gas and 1.61vol.% methane gas. The mixed gas was supplied at 851liters/hr (as converted into that under the standard state). The maximum pressure in the adsorption unit during the adsorption step was set to 850kPa (gauge pressure) , whereas the minimumpressure in the adsorption unit during the desorption step was set to 6kPa (gauge pressure) .

As a result, product gas was obtained at a flow rate of 503 liters/hr (as converted into that under the standard state). The hydrogen purity of the product gas was 99.999%. The yield of hydrogen gas (the ratio of recovered hydrogen gas relative to the amount of hydrogen gas contained in the mixed gas) was 76%.

### [Comparative Example 1]

In the Comparative Example, use was made of a PSA separation apparatus Y as shown in Fig. 4, which comprised three adsorption towers 1'-3'. Each adsorption tower 1'-3' was not separated into a plurality of sub-units. A cycle consisting of Steps 1-6 shown in Fig. 8 was repetitively performed using the PSA separation apparatus Y under the conditions described below to separate hydrogen gas from mixed gas.

Each of the adsorption towers 1'―3' was loaded with 1.34 liters of zeolite molecular sieve and 1.66 liters of carbon molecular sieve as adsorbents (3.0 liters in total). Mixed gas was supplied in the same amount as Example 1. The maximum pressure in the adsorption towers 1'-3' during the adsorption step was set to 850kPa (gauge pressure), the minimum pressure in the adsorption towers 1'―3' during the desorption step was set to 6kPa (gauge pressure), and the final pressure in each adsorption tower 1'―3' in the depressurization step was set to 350kPa (gauge pressure).

As a result, product gas was obtained at a flow rate of 503 liters/hr (as converted into that under the standard state) . The hydrogen purity of the product gas was 99.999%. The yield of hydrogen gas was 76%.

When Example 1 is compared with Comparative Example 1, the purity and yield of hydrogen gas obtained is equal. In Example 1, however, the total amount of adsorbents used for the two adsorbent units 1 and 2 is 6 liters ((0.9+2.1)×2). On the other hand, the total amount of adsorbents used for the three adsorption towers 1'-3' in Comparative Example 1 is 9 liters (3×3). That is, the separation method in Example 1 provides the same results as the prior art method while using a smaller amount of adsorbents than the prior art method.

## Claims

1. A method for separating object gas from mixed gas using a plurality of adsorption units each of which is loaded with an adsorbent, the method comprising repeating a cycle in each of the adsorption units, the cycle comprising:
an adsorption step for introducing the mixed gas into a selected one of the adsorption units for adsorbing unnecessary gas contained in the mixed gas by the adsorbent for outputting product gas in which the object gas is enriched from the adsorption unit;
a desorption step for desorbing the unnecessary gas from the adsorbent;
a cleaning step for discharging remaining gas remaining in the adsorption unit from the adsorption unit using cleaning gas; and
a pressurizing step for raising pressure in the adsorption unit;
said each adsorption unit including a first sub-unit which includes a product gas outlet for outputting the product gas and which is loaded with a first adsorbent, a second sub-unit which includes a mixed gas inlet for introducing the mixed gas and which is connected to the first sub-unit and is loaded with a second adsorbent, and switching means for switching the first sub-unit and the second sub-unit between a mutually communicating state and a mutually non-communicating state;
the desorption step being performed by bringing the first sub-unit and the second sub-unit into the non-communicating state while opening the mixed gas inlet of the second sub-unit:
the cleaning step including a second sub-unit cleaning step for introducing first remaining gas remaining in the first sub-unit into the second sub-unit as cleaning gas by bringing the first sub-unit and the second sub-unit into the communicating state while discharging second remaining gas remaining in the second sub-unit through the mixed gas inlet.

2. The method for separating object gas according to claim 1,
wherein the cleaning step further includes a continuous sub-unit cleaning step in which the first sub-unit and the second sub-unit of a first adsorption unit undergoing the cleaning step are brought into the communicating state and the product gas outputted from the first sub-unit of a second adsorption unit undergoing the adsorption step is introduced into the first sub-unit of the first adsorption unit as the cleaning gas while third remaining gas remaining in the first sub-unit and the second sub-unit of the first adsorption unit is discharged through the mixed gas inlet of the second sub-unit of the first adsorption unit.

3. The method for separating object gas according to claim 2,
wherein minimum pressure in the first sub-unit of the first adsorption unit during the continuous sub-unit cleaning step is no less than atmospheric pressure and no more than 50kPa (gauge pressure).

4. The method for separating object gas according to claim 1,
wherein maximum pressure in the adsorption unit during the adsorption step is no less than 100kPa (gauge pressure).

5. The method for separating object gas according to claim 1,
wherein a volume of the first adsorbent loaded in the first sub-unit is 20-80% of a total volume of the first adsorbent and the second adsorbent loaded in the adsorption unit.

6. The method for separating object gas according to claim 1,
wherein the mixed gas contains hydrogen gas as the object gas.

7. The method for separating object gas according to claim 1,
wherein the mixed gas contains carbonic acid gas as the unnecessary gas.

8. An apparatus for separating object gas from mixed gas provided
with a plurality of adsorption units each loaded with an adsorbent, the apparatus repetitively performing a cycle in each of the adsorption units, the cycle comprising:
an adsorption step for introducing the mixed gas into a selected one of the adsorption units for adsorbing unnecessary gas contained in the mixed gas by the adsorbent for outputting product gas in which the object gas is enriched from the adsorption unit;
a desorption step for desorbing the unnecessary gas from the adsorbent;
a cleaning step for discharging remaining gas remaining in the adsorption unit from the adsorption unit using cleaning gas; and
a pressurizing step for raising pressure in the adsorption unit;
said each adsorption unit including a first sub-unit which includes a product gas outlet for outputting the product gas and which is loaded with a first adsorbent, a second sub-unit which includes a mixed gas inlet for introducing the mixed gas and which is connected to the first sub-unit and is loaded with a second adsorbent, and switching means for switching the first sub-unit and the second sub-unit between a mutually communicating state and a mutually non-communicating state ;
the first adsorbent and the second adsorbent being a same kind of adsorbents capable of adsorbing a same kind of unnecessary gas.
